# EUROPÄISCHE PATENTSCHRIFT

(11) **EP 4 198 781 B1**
(45) Veröffentlichungstag und Bekanntmachung des Hinweises auf die Patenterteilung: **06.11.2024**
(21) Anmeldenummer: 21215563.4
(22) Anmeldetag: 17.12.2021
(51) Int. Cl.: G06F 21/60, F03D 7/04

(54) **VERFAHREN ZUR ZUGRIFFSVERWALTUNG EINER WINDENERGIEANLAGENSTEUERUNG EINER WINDENERGIEANLAGE SOWIE WINDENERGIEANLAGENSTEUERUNG UND WINDENERGIEANLAGE FÜR DAS VERFAHREN**
METHOD FOR MANAGING ACCESS TO A CONTROL SYSTEM OF A WIND POWER PLANT AND WIND POWER PLANT CONTROL SYSTEM AND WIND POWER PLANT FOR THE METHOD
PROCÉDÉ DE GESTION DE L'ACCÈS D'UNE COMMANDE D'ÉOLIENNE D'UNE ÉOLIENNE, AINSI QUE COMMANDE D'ÉOLIENNE ET ÉOLIENNE CORRESPONDANTES

(43) Veröffentlichungstag der Anmeldung: 21.06.2023
(73) Patentinhaber: Wobben Properties GmbH, 26607 Aurich (DE)
(72) Erfinder: Fuchs, Andreas, 25557 Hanerau-Hademarschen (DE); Gehl, Harald, 24539 Neumünster (DE)
(74) Vertreter: Eisenführ Speiser

(56) Entgegenhaltungen:
- EP-A1- 3 515 035
- WO-A1-2014/153673
- US-A1- 2009 125 129

## Beschreibung

Die Erfindung betrifft ein Verfahren zur Zugriffsverwaltung von Zugriffen durch Benutzer, wie Servicepersonal, auf eine Windenergieanlagensteuerung. Außerdem betrifft die Erfindung eine Windenergieanlagensteuerung, um das Verfahren auszuführen, sowie ein Computerprogrammprodukt, das eine oder einen Teil einer Betriebssoftware einer Windenergieanlagensteuerung ist. Zudem umfasst die Erfindung eine Windenergieanlage zum Ausführen des Verfahrens.

Gemäß dem Stand der Technik sind Zugriffe, wie Steuer- und Lesezugriffe, durch Benutzer, wie durch einen Betreiber, Servicepersonal oder einen Hersteller, auf eine Windenergieanlage oder mehrere Windenergieanlagen, die beispielsweise auch als Windpark organisiert sein können, möglich. Ein Zugriff auf mehrere Windenergieanlagen, die als Windpark organisiert sind, kann auch über einen dem Windpark zugeordneten Windparkregler erfolgen. Steuer- und Lesezugriffe auf einzelne Windenergieanlagen eines Windparks werden somit häufig auch als Lese- und Steuerzugriffe über einen Windparkregler des Windparks realisiert.

Bei einem Zugriff, der ein Lesezugriff ist, kann ein Benutzer beispielsweise aktuelle Betriebsdaten, wie die zurzeit in das Versorgungsnetz eingespeiste Energie, auslesen oder abfragen. Lesezugriffe sind somit überwiegend als derartige Zugriffe anzusehen, bei denen nicht in den Betrieb der Windenergieanlage eingegriffen wird. Ein Lesezugriff ermöglicht beispielsweise keine Änderungen von Betriebsparametern einer Windenergieanlage durch einen Benutzer. Lesezugriffe sind daher als unkritisch für den Betrieb und insbesondere für ein Versorgungsnetz, mit dem die Windenergieanlage, auf die der Lesezugriff erfolgt, verbunden ist, einzustufen.

Demgegenüber kann bei Zugriffen, die Steuerzugriffe sind, direkt oder indirekt auf den Betrieb der Windenergieanlage oder den Windparkregler eingewirkt werden, indem z. B. die Betriebsparameter verändert werden. Betriebsparameter sind z. B. Regelgrößen und dergleichen. Durch einen Steuerzugriff, der auch als Schreibzugriff bezeichnet werden kann, lassen sich beispielsweise auch ein oder mehrere Windenergieanlagen an- oder abschalten oder es kann eine Spannung oder eine Frequenz einer aktuell von der oder den Windenergieanlagen erzeugten Energie, die in ein verbundenes Versorgungsnetz eingespeist wird, variiert werden. Bei Steuerzugriffen oder Schreibzugriffen handelt es sich daher um kritische Zugriffe für den Betrieb. Insbesondere bei unsachgemäßer Steuerung einer Windenergieanlage kann diese beschädigt oder ein mit der Windenergieanlage verbundenes Versorgungsnetz negativ beeinflusst werden.

Daher ist zum Erlangen eines Zugriffs auf eine Windenergieanlagensteuerung oder einen Windparkregler gemäß dem Stand der Technik eine Authentisierung eines Benutzers gegenüber der Windenergieanlage oder dem Windparkregler nötig, um nur berechtigten Benutzern einen Zugriff zu erlauben. Eine Authentisierung eines Benutzers erfolgt gemäß dem Stand der Technik beispielsweise durch Übergabe eines Tupels aus Passwort und Benutzerkennung, mit denen sich der Benutzer gegenüber der Windenergieanlage oder dem Windparkregler bzgl. seiner Identität identifiziert. Durch Übergabe an die Windenergieanlage bzw. den Windparkregler werden dem Benutzer so Steuer- oder Lesezugriffe erlaubt.

Hierbei ist es üblich, einem Benutzer in Abhängigkeit von seinen Benutzerdaten zur Authentisierung bestimmte Zugriffe einzuräumen. Das heißt, dass im üblichen Fall, dass mehrere unterschiedliche Benutzer auf eine Windenergieanlage zugreifen können, jedem Benutzer unterschiedliche Rechte bzgl. Schreib- und/oder Lesezugriffen erlaubt sind. Die einem Benutzer zugeordneten möglichen Zugriffe sind in einer Zugriffsverwaltung der Windenergieanlage hinterlegt und werden nach einer Authentisierung eines Benutzers aus der Zugriffsverwaltung abgerufen.

Die Berechtigung der Benutzer ändert sich im Laufe der Lebensdauer einer Windenergieanlage jedoch regelmäßig. Beispielsweise werden bei einer Änderung der Betriebssoftware oder sogar der Betriebshardware einer Windenergieanlage geänderte oder neue Lese- und Steuerzugriffe möglich, die einem oder mehreren der Benutzer zugeordnet werden müssen. Hierbei ist häufig eine Änderung der Rechte einer Vielzahl von Benutzern in der Zugriffsverwaltung nötig.

Da eine Anpassung der Benutzerrechte in der Zugriffsverwaltung lokal in der Windenergieanlage sehr aufwendig auszuführen ist, wurden bereits Versuche unternommen, eine Zugriffsverwaltung extern, also an einer zentralen Stelle außerhalb der Windenergieanlage, beispielsweise einer Leitwarte, für eine Vielzahl von Windenergieanlagen zu organisieren und auch zu aktualisieren. In jüngster Zeit sind jedoch aufgrund sich häufig ändernder Rahmenbedingungen einzelner Windenergieanlagen hardware- und auch softwareseitige Anpassungen individueller Windenergieanlagen nötig, um diese Bedingungen zu erfüllen. Eine Zugriffsverwaltung, die in einer übergeordneten Instanz organisiert ist, bietet durch die individuellen Anforderungen an einzelne Windenergieanlagen somit keine Effizienzvorteile mehr.

Das Dokument WO 2014/153673 A1 offenbart ein Verfahren und System zur Überwachung und Steuerung mehrerer Windenergieanlagen über ein Netzwerk. Unterschiedliche Zugriffs- und Steuerebenen werden in Bezug auf die mehreren Windenergieanlagen für verschiedene Benutzer mit verschiedenen Benutzergruppen erlaubt. Es wird somit ein System offenbart, um Aktionen, die Benutzer durchführen können, und Informationen, die Benutzer sehen und manipulieren können, in Verbindung mit den mehreren Windenergieanlagen zu verwalten.

Das Dokument EP 3 515 035 A1 sowie das Dokument US 2009/0125129 A1 befassen sich ebenfalls mit Benutzerzugriffen auf verschiedene Systeme durch Vergabe von Zugriffsberechtigungen, die in Datenbanken hinterlegt sind.

Aufgabe der vorliegenden Erfindung ist es daher, den Problemen des Standes der Technik zu begegnen. Insbesondere soll eine vereinfachte Zugriffsverwaltung für einen Zugriff auf eine Windenergieanlage gefunden werden, die vorzugsweise eine einfache Anpassbarkeit der Benutzerrechte an individuelle Änderungen einer Betriebshard- und Betriebssoftware einer Windenergieanlage ermöglichen. Insbesondere soll eine Alternative zum Stand der Technik gefunden werden.

Hierzu umfasst die Erfindung ein Verfahren nach Anspruch 1.

Gemäß der Erfindung wird ein Verfahren zur Zugriffsverwaltung einer Windenergieanlagensteuerung einer Windenergieanlage mit einer Betriebssoftware vorgeschlagen. Das Verfahren umfasst zunächst das Empfangen einer Benutzeridentifikation mit einer von mehreren Benutzerschnittstellen. Das heißt, dass mehrere Benutzerschnittstellen einer Windenergieanlagensteuerung vorgesehen sind und von einer dieser Benutzerschnittstellen eine Benutzeridentifikation von einem Benutzer, der sich über die Benutzerschnittstelle identifizieren will, um einen Zugriff auf die Windenergieanlagensteuerung zu erhalten, empfangen wird. Eine Benutzeridentifikation erfolgt beispielsweise durch Eingabe eines Benutzernamens und eines Passworts des Benutzers.

Gemäß dem Verfahren wird die Benutzeridentifikation oder ein Teil der Benutzeridentifikation, also beispielsweise ein empfangener Benutzername, einer Zugriffsgruppe zugewiesen. Dieser Zugriffsgruppe sind ein oder mehrere Berechtigungsgruppen einer Gesamtmenge von Berechtigungsgruppen zugeordnet. Jeder Berechtigungsgruppe sind wiederum ein oder mehrere Ausgangswertspeicherstellen und/oder Eingangswertspeicherstellen der Betriebssoftware zugeordnet.

Das heißt, dass in der Betriebssoftware Ausgangswertspeicherstellen vorgesehen sind, um vorzugsweise Parameter oder dergleichen, die einen Betriebszustand anzeigen und somit als Betriebsparameter bezeichnet werden können, für die Anzeige oder eine Weiterverarbeitung als Ausgabewerte bereitzustellen. Die Ausgangswertspeicherstellen können von einem berechtigten Benutzer ausgelesen bzw. der Parameter oder Ausgabewert abgerufen werden. Eingangswertspeicherstellen entsprechen demgegenüber Speicherstellen der Betriebssoftware, die zum Empfang oder zur Entgegennahme von Schreibzugriffen, also insbesondere auch Steuerzugriffen, dienen. Ein Parameter oder Wert, der in eine Eingangswertspeicherstelle eingetragen wird, dient demnach zur Anpassung der Steuerung.

Ferner sind Berechtigungsgruppen vorgesehen, wobei jeder Berechtigungsgruppe ein oder mehrere Eingangswertspeicherstellen und/oder ein oder mehrere Ausgangswertspeicherstellen zugeordnet sind. Das heißt, es sind beispielsweise einzelne Module der Betriebssoftware, die für bestimmte technische Aufgaben beim Betrieb einer Windenergieanlage vorgesehen sind, entsprechend ihrer Aufgabe einer Berechtigungsgruppe zugeordnet. Das heißt, es kann beispielsweise eine Berechtigungsgruppe vorgesehen sein, die ausschließlich Zugriffe auf Verstellantriebe der Rotorblätter ermöglicht. Eine weitere Berechtigungsgruppe dient beispielsweise, um Zugriffe auf die Regelung der Einspeisung von Energie in ein Netz zu erlauben. Für einzelne technische Aufgaben können beispielsweise auch unterschiedliche Berechtigungsgruppen vorgesehen sein, die etwa nur Lesezugriffe oder nur Schreibzugriffe auf einzelne technische Bereiche ermöglichen. Vorzugsweise ist so jede Ausgangswertspeicherstelle und jede Eingangswertspeicherstelle mindestens einer, aber besonders bevorzugt mehreren Berechtigungsgruppen, zugeordnet. Ferner sind Zugriffsgruppen definiert, die ein oder mehrere Berechtigungsgruppen der Gesamtmenge von Berechtigungsgruppen zugeordnet sind.

Gemäß der Erfindung wird dann ein Zugriff von der Benutzerschnittstelle auf alle Ausgangswertspeicherstellen und/oder Eingangswertspeicherstellen erlaubt, die der zugewiesenen Zugriffsgruppe über die Berechtigungsgruppen zugeordnet sind.

Dem Benutzer wird somit eine Zugriffsgruppe nach seiner Identifikation mit der Benutzeridentifikation zugeordnet. Der Zugriffsgruppe sind Berechtigungsgruppen zugeordnet, wobei diese Berechtigungsgruppen wiederum den Eingangswertspeicherstellen und/oder Ausgangswertspeicherstellen zugeordnet sind, auf die ein Benutzer dann zugreifen kann.

Durch das Verfahren ist es möglich, bei Hardwareänderungen einzelnen Berechtigungsgruppen neue Eingangswertspeicherstellen oder Ausgangswertspeicherstellen zuzuordnen. Da die Berechtigungsgruppen über die Zugriffsgruppen Benutzern zugeordnet bleiben oder sind, muss im Fall einer Änderung der Hardware und/oder der Software, um diesen technischen Bereich weiterhin für einen gleichen Benutzerkreis zugänglich zu machen, damit lediglich die entsprechende Berechtigungsgruppe angepasst werden.

Andererseits ermöglicht das Verfahren durch Anpassen einer einzelnen Zugriffsgruppe, beispielsweise durch Hinzufügen von Berechtigungsgruppen oder durch Entfernen von Berechtigungsgruppen, Zugriffe auf eine angepasste Soft- und/oder Hardware für mehrere Benutzer, die derselben Zugriffsgruppe zugeordnet werden, gleichzeitig anzupassen. Demnach ist es auch möglich, mehreren Benutzern gleiche Zugriffsgruppen zuzuordnen, so dass auch die Verwaltung der Zugriffsrechte eines einzelnen Benutzers durch einfaches Zuordnen zu einer entsprechenden Zugriffsgruppe ermöglicht wird.

Gemäß einer ersten Ausführungsform wird mit dem Benutzeridentifikator ein Lokalisierungsidentifikator empfangen. Der Lokalisierungsidentifikator zeigt zumindest an, ob die Benutzeridentifikation von einer innerhalb der Windenergieanlage liegenden Benutzerschnittstelle oder von einer Benutzerschnittstelle eines entfernten Rechners, beispielsweise über eine Leitzentrale oder einen Windparkregler, mittels einer Windenergieanlagenschnittstelle empfangen wurde. Die Betriebssoftware kann demnach Zugriffsrechte auch in Abhängigkeit von einer Position eines Benutzers koordinieren, da über den Lokalisierungsidentifikator feststellbar ist, von welchem Ort ein Benutzer Zugriff auf die Windenergieanlagensteuerung wünscht.

Gemäß einer Ausführungsform des Verfahrens zeigt der Lokalisierungsidentifikator in dem Fall, dass dieser anzeigt, dass die Benutzeridentifikation von einer innerhalb der Windenergieanlage liegenden Benutzerschnittstelle empfangen wurde, auch an, von welcher von mehreren in der Windenergieanlage liegenden Benutzerschnittstellen die Benutzeridentifikation empfangen wurde. Vorzugsweise weisen eine Benutzerschnittstelle in einem Turm der Windenergieanlage, eine Benutzerschnittstelle in einer Gondel der Windenergieanlage sowie besonders bevorzugt eine Benutzerschnittstelle in einer Rotornarbe der Windenergieanlage jeweils unterschiedliche Lokalisierungsidentifikatoren auf, so dass die Betriebssoftware entsprechende Zugriffsrechte in Abhängigkeit von dem Lokalisierungsidentifikator vergeben kann.

Gemäß einer weiteren Ausführungsform wird eine empfangene Benutzeridentifikation in Abhängigkeit von dem damit zusammen empfangenen Lokalisierungsidentifikator einer von mehreren unterschiedlichen Zugriffsgruppen zugeordnet. Das heißt, dass in Abhängigkeit von der identifizierten Benutzerschnittstelle mithilfe des Lokalisierungsidentifikators ein und demselben Benutzer unterschiedliche Zugriffsgruppen zugeordnet werden können. Es ist demnach beispielsweise möglich, auf bestimmte Eingangswertspeicherstellen, die nur einer Berechtigungsgruppe einer bestimmten Zugriffsgruppe zugeordnet sind, zu schreiben, wenn ein Zugriff von einer Schnittstelle innerhalb der Windenergieanlage erfolgt. Es ist demnach besonders bevorzugt vorgesehen, dass bestimmte Schreibzugriffe nur über einzelne vordefinierte Schnittstelle der Windenergieanlage möglich sind. Insbesondere sicherheitskritische Zugriffe auf eine Windenergieanlage aus der Ferne und somit auch auf eine Vielzahl von Windenergieanlagen gleichzeitig, um so beispielsweise beabsichtigt ein Versorgungsnetz anzugreifen, können so verhindert werden. Aus Sicherheitsaspekten ist auch eine Zuordnung unterschiedlicher Zugriffsgruppen zu ein und demselben Benutzer innerhalb der Windenergieanlage in Abhängigkeit davon, von welcher Benutzerschnittstelle der Benutzer einen Zugriff wünscht, möglich. Beispielsweise ist bei einem Zugriff über eine Benutzerschnittstelle in der Rotornarbe ein Lösen einer Bremse oder eine Wiederaufnahme eines Betriebs aus Sicherheitsgründen durch einen entsprechend über die Zugriffsgruppe beschränkten Zugriff nicht möglich.

Gemäß einer weiteren Ausführungsform ist mit der Betriebssoftware ein Aktivstatus vergebbar. Der Aktivstatus ist zu jedem Zeitpunkt nur für eine einzige Benutzerschnittstelle von den mehreren Benutzerschnittstellen vergebbar. Ein Zugriff über eine Benutzerschnittstelle auf eine Eingangswertspeicherschnittstelle, also ein Steuer- oder Schreibzugriff, wird nur dann über eine Benutzerschnittstelle erlaubt, wenn die Betriebssoftware der Benutzerschnittstelle den Aktivstatus vergeben hat. Der Aktivstatus wird vorzugsweise nach einer vorherigen Anforderung des Aktivstatus über die Benutzerschnittstelle vergeben.

So kann sichergestellt werden, dass nicht mehrere Benutzer gleichzeitig einen Schreibzugriff auf eine Eingangswertspeicherstelle vornehmen, also mehrere Schreibzugriffe gleichzeitig erfolgen. Insbesondere ist durch eine vorab nötige Anforderung eines Aktivstatus durch einen Benutzer auch gewährleistet, dass ein Aktivstatus nur dann einer Benutzerschnittstelle zugeordnet wird und somit nicht mehr für andere Benutzerschnittstellen zur Verfügung steht, wenn ein Benutzer auch tatsächlich einen Steuer- oder Schreibzugriff, also einen Zugriff auf eine Eingangswertspeicherstelle wünscht. Ein Aktivstatus wird also vorzugsweise nicht automatisch vergeben, wenn ein Benutzer sich neu identifiziert, nachdem bereits für einen identifizierten Benutzer der Aktivstatus vergeben war. Ein unnötiges Blockieren des Aktivstatus ist somit vermeidbar.

Gemäß einer weiteren Ausführungsform ist jedem Lokalisierungsidentifikator jeweils eine Priorität in der Betriebssoftware zugeordnet. Nach dem Empfangen einer Anforderung eines Aktivstatus von einer Benutzerschnittstelle für einen neuen Zugriff wird ferner geprüft, ob der Aktivstatus bereits einer anderen Benutzerschnittstelle für einen zuvor angeforderten Zugriff vergeben wurde. Im Fall, dass der Aktivstatus an die andere Benutzerschnittstelle vergeben ist, wird der anderen Benutzerschnittstelle der Aktivstatus entzogen, wenn der Lokalisierungsidentifikator der Benutzerschnittstelle für den neuen Zugriff eine höhere Priorität als der Lokalisierungsidentifikator der anderen Benutzerschnittstelle aufweist. Der Benutzerschnittstelle für den neuen Zugriff wird dann der Aktivstatus entsprechend der Anforderung zugeordnet. Demgegenüber wird der Aktivstatus der anderen Benutzerschnittstelle nicht entzogen, wenn der Lokalisierungsidentifikator der anderen Benutzerschnittstelle die gleiche oder eine höhere Priorität als der Lokalisierungsfaktor der Benutzerschnittstelle für den neuen Zugriff aufweist. In diesem Fall wird der Benutzerschnittstelle für den neuen Zugriff eine Meldung ausgegeben und die andere Benutzerschnittstelle behält den Aktivstatus.

Somit ist sichergestellt, dass beispielsweise, wenn von einer lokalen Benutzerschnittstelle der Windenergieanlage ein Zugriff auf die Windenergieanlage mit einem Aktivstatus ausgeführt wird, von einer Benutzerschnittstelle, die entfernt liegt und der vorzugsweise daher eine geringere Priorität über den Lokalisierungsidentifikator zugeordnet ist, der lokale Zugriff nicht durch den Zugriff von außerhalb unterbrochen wird. Insbesondere bei Serviceteams, die einen Zugriff vor Ort zeitlich abstimmen, wird so ein Zugriff vor Ort nicht durch einen Fernzugriff unterbrochen. Es kann andererseits auch ein lokaler Zugriff bei entsprechend zugeordneten Prioritäten augenblicklich ausgeführt werden, auch wenn eigentlich noch ein Zugriff von einem entfernten Rechner im Gange ist, der dann unterbrochen wird.

Gemäß einer weiteren Ausführungsform ist jeder Zugriffsgruppe jeweils eine Priorität zugeordnet. Nach dem Empfang einer Anforderung eines Aktivstatus von einer Benutzerschnittstelle, von der eine Benutzeridentifikation für einen neuen Zugriff empfangen wurde, wird geprüft, ob der Aktivstatus für eine andere Benutzerschnittstelle vergeben ist. Im Fall, dass der Aktivstatus für eine andere Benutzerschnittstelle vergeben ist, wird der anderen Benutzerschnittstelle der Aktivstatus entzogen, wenn die der Benutzeridentifikation zugeordnete Zugriffsgruppe des neuen Zugriffs eine höhere Priorität als die Zugriffsgruppe der empfangenen Benutzeridentifikation von der anderen Benutzerschnittstelle aufweist. Demnach wird dann der Benutzerschnittstelle für den neuen Zugriff der Aktivstatus vergeben.

Über die Zugriffsgruppen und deren Priorisierung sind somit Benutzer priorisierbar. Insbesondere im Fall, dass mehrere Zugriffe von Benutzerschnittstellen mit gleichpriorisierten Lokalisierungsidentifikatoren ausgeführt werden, kann so Benutzern, denen über ihre Zugriffsgruppe eine höhere Priorität zugeordnet ist, der Aktivstatus priorisiert vergeben werden.

Gemäß einer weiteren Ausführungsform wird ein Aktivstatus ab der Vergabe nach Ablauf einer bestimmten Dauer zurückgenommen. Alternativ oder zusätzlich ist durch Freigabe des Aktivstatus mit der Benutzerschnittstelle, an die der Aktivstatus vergeben ist, eine Rückgabe des Aktivstatus möglich. Es wird so verhindert, dass der Aktivstatus über einen Zeitraum hinaus, in dem ein Zugriff auf die Windenergieanlagensteuerung tatsächlich benötigt wird, bei einer Benutzerschnittstelle verbleibt. Insbesondere, wenn einem solchen bestehenden Zugriff hohe Prioritäten zugeordnet sind, würde so ein Zugriff von einer anderen Benutzerschnittstelle, von der ebenfalls der Aktivstatus benötigt wird, unnötigerweise verhindert werden.

Gemäß einer weiteren Ausführungsform umfasst die Betriebssoftware mehrere Softwaremodule. Mehrere oder alle Kommunikationsausgänge der Softwaremodule sind jeweils als Ausgangswertspeicherstellen in der Betriebssoftware bereitgestellt und mehrere oder alle Kommunikationseingänge der Softwaremodule sind jeweils als Eingangswertspeicherstellen bereitgestellt. Somit kann innerhalb der Betriebssoftware über die Berechtigungsgruppen auf die Softwaremodule zur Beeinflussung der Funktion der Softwaremodule zugegriffen werden und/oder Parameter der Softwaremodule ausgelesen werden.

Gemäß einer weiteren Ausführungsform werden mit einer Benutzerschnittstelle Daten der Ausgangswertspeicherstellen, die der zugewiesenen Zugriffsgruppe über die Berechtigungsgruppen zugeordnet sind, dargestellt. Zusätzlich oder alternativ werden über die Benutzerschnittstelle Daten für die Eingangswertspeicherstellen empfangen, die der zugewiesenen Zugriffsgruppe über die Berechtigungsgruppen zugeordnet sind. Die Benutzerschnittstelle ist vorzugsweise als Eingabeterminal, beispielsweise in Form einer grafischen Oberfläche, ausgestattet, um entsprechend der Zugriffsgruppe Daten der Ausgangswertspeicherstellen anzuzeigen und Eingabefelder bereitzustellen, um Daten entgegenzunehmen, die in die Eingangswertspeicherstellen geschrieben werden können. Die Benutzerschnittstelle, insbesondere, wenn diese Mittel für eine grafische Darstellung bietet, weist vorzugsweise auch ein Anforderungsfeld auf, um den Aktivstatus anzufordern. Außerdem wird über ein solches Mittel zur grafischen Darstellung vorzugsweise auch angezeigt, ob der Benutzerschnittstelle zurzeit der Aktivstatus zugeordnet ist.

Gemäß einer weiteren Ausführungsform ist mehreren unterschiedlichen Benutzergruppen zumindest ein gleicher Satz von Ausgangswertspeicherstellen und/oder Eingangswertspeicherstellen zugeordnet. Das heißt, es gibt mehrere Benutzergruppen, denen zwar unterschiedliche Ausgangswertspeicherstellen und/oder Eingangswertspeicherstellen insgesamt zugeordnet sind, aber immer ein gleicher Satz von Ausgangswertspeicherstellen und/oder Eingangswertspeicherstellen zugeordnet ist. Eine Bildung von Zugriffsgruppen durch unterschiedliche Benutzergruppen, ohne das Festlegen neuer Benutzergruppen, ist somit möglich.

Gemäß einer weiteren Ausführungsform umfasst die Erfindung ein Computerprogrammprodukt, das Instruktionen umfasst, die, wenn sie auf einer Windenergieanlagensteuerung ausgeführt werden, ausgebildet sind, das Verfahren nach einer der vorgenannten Ausführungsformen auszuführen.

Außerdem umfasst die Erfindung eine Windenergieanlagensteuerung, die eingerichtet ist, nämlich insbesondere durch ein Computerprogrammprodukt gemäß der Erfindung, das Verfahren nach einer der vorgenannten Ausführungsformen auszuführen.

Außerdem umfasst die Erfindung eine Windenergieanlage mit einer Windenergieanlagensteuerung gemäß der Erfindung.

Gemäß einer Ausführungsform der Windenergieanlage umfasst diese mindestens eine Benutzerschnittstelle in der Windenergieanlage und mindestens eine Benutzerschnittstelle, die außerhalb der Windenergieanlage liegt. Die Benutzerschnittstelle außerhalb der Windenergieanlage wird insbesondere durch einen entfernten Rechner gebildet.

Weitere Ausführungsformen ergeben sich anhand der in den Figuren näher erläuterten Ausführungsbeispiele. Hierbei zeigen:
- Figur 1: eine Windenergieanlage und
- Figur 2: die Schritte des Verfahrens gemäß einem Ausführungsbeispiel.

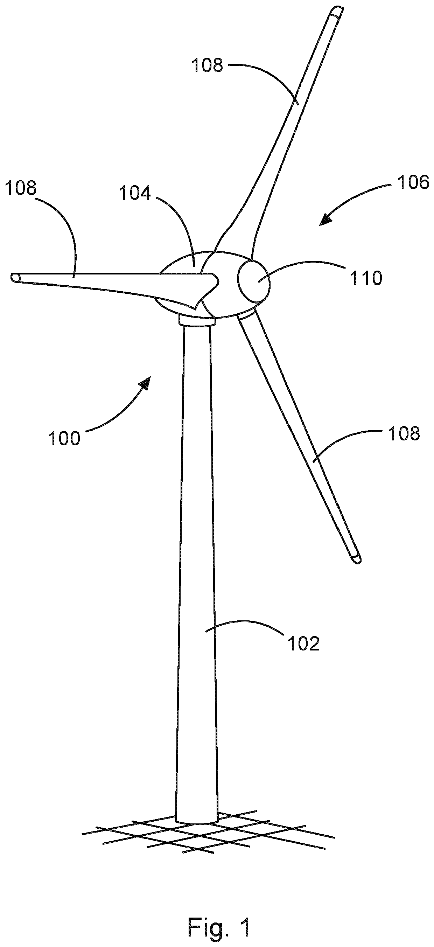

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

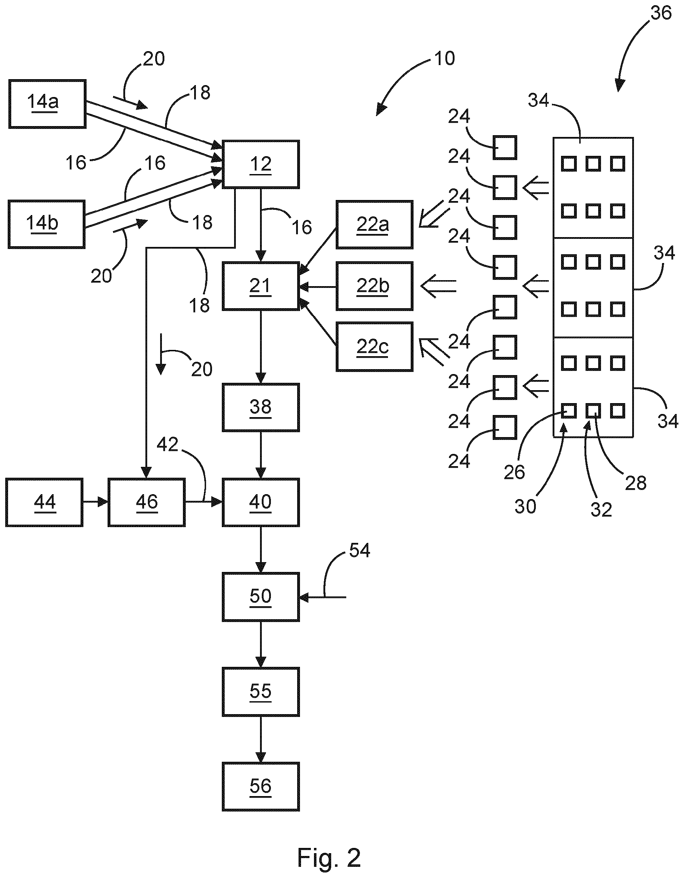

Figur 2 zeigt ein Verfahren 10 zur Zugriffsverwaltung einer Windenergieanlagensteuerung einer Windenergieanlage 100 mit einer Betriebssoftware. In einem Schritt 12 werden von einer von mehreren Benutzerschnittstellen 14a, 14b eine Benutzeridentifikation 16 und ein Lokalisierungsidentifikator 18 empfangen. Der Lokalisierungsidentifikator 18 weist eine Priorität 20 auf. Nach dem Empfangen 12 wird im Schritt 21 dem empfangenen Benutzeridentifikator 16 eine vom Benutzeridentifikator 16 abhängige Zugriffsgruppe 22a, 22b, 22c mehrerer Zugriffsgruppen 22a, 22b, 22c zugewiesen.

Die Zugriffsgruppen 22a, 22b, 22c umfassen mehrere Berechtigungsgruppen 24, wobei jeder Berechtigungsgruppe 24 mehrere Ausgangswertspeicherstellen 26 und Eingangswertspeicherstellen 28 zugeordnet sind. Die Eingangswertspeicherstellen 28 sowie die Ausgangswertspeicherstellen 26 entsprechen Kommunikationseingängen 32 und Kommunikationsausgängen 30 von verschiedenen Softwaremodulen 34 der Betriebssoftware 36 der Windenergieanlagensteuerung.

Im darauffolgenden Schritt 38 wird ein Zugriff von der Benutzerschnittstelle 14a, 14b auf alle Ausgangswertspeicherstellen 26 und Eingangswertspeicherstellen 28, die der zugewiesenen Zugriffsgruppe 22a, 22b, 22c über die zugeordneten Berechtigungsgruppen 24 zugeordnet sind, erlaubt. Im Schritt 40 wird ein Aktivstatus 42 angefordert. Hierzu wird zunächst in einem Schritt 44 geprüft, ob der Aktivstatus 42 bereits vergeben ist, nämlich für eine andere Benutzerschnittstelle 14a, 14b. Wenn der Aktivstatus 42 bereits vergeben ist und der neue Zugriff eine höhere Priorität 20 aufweist, wird der Aktivstatus 42 im Schritt 46 von der anderen Benutzerschnittstelle 14a, 14b zurückgenommen und der Benutzerschnittstelle 14a, 14b für den neuen Zugriff zugewiesen. Die Priorität 20 wird hierzu anhand des Lokalisierungsidentifikators 18, der im Schritt 12 empfangen wurde, mit einer Priorität 20 des Lokalisierungsidentifikators 18 der anderen Benutzerschnittstelle 14a, 14b verglichen.

Im Schritt 50 wird dann über die Benutzerschnittstelle 14a, 14b ein Zugriff vorgenommen. Im Schritt 52 wird geprüft, ob eine vordefinierte Dauer 54 abgelaufen ist. Der Aktivstatus 42 wird im Schritt 55 zurückgenommen, wenn die Dauer 54 abgelaufen ist. Im Schritt 56 wird eine Abmeldung eines Benutzers von der Benutzerschnittstelle 14a, 14b empfangen und der Zugriff wird beendet.

### Bezugszeichenliste

- 10: Verfahren
- 12: Empfang Benutzeridentifikation und Lokalisierungsidentifikator
- 14a: Benutzerschnittstelle
- 14b: Benutzerschnittstelle
- 16: Benutzeridentifikation
- 18: Lokalisierungsidentifikator
- 20: Priorität
- 21: Zuweisen der Benutzeridentifikation zu einer Zugriffsgruppe
- 22a: Zugriffsgruppe
- 22b: Zugriffsgruppe
- 22c: Zugriffsgruppe
- 24: Berechtigungsgruppen
- 26: Ausgangswertspeicherstellen
- 28: Eingangswertspeicherstellen
- 30: Kommunikationsausgänge
- 32: Kommunikationseingänge
- 34: Softwaremodule
- 36: Betriebssoftware
- 38: Erlaubnis Zugriff auf Ausgangswertspeicherstellen und Eingangswertspeicherstellen
- 40: Anforderung Aktivstatus
- 42: Aktivstatus
- 44: Überprüfung anderweitige Vergabe Aktivstatus
- 46: Zurücknahme Aktivstatus bei höherer Priorisierung
- 50: Zugriff
- 52: Überprüfung vordefinierte Dauer
- 54: vordefinierte Dauer
- 55: Zurücknahme Aktivstatus
- 56: Abmeldung Benutzer und Beendigung Zugriff
- 100: Windenergieanlage
- 102: Turm
- 104: Gondel
- 106: aerodynamischer Rotor
- 108: Rotorblätter
- 110: Spinner

## Patentansprüche

1. Verfahren (10) zur Zugriffsverwaltung einer Windenergieanlagensteuerung einer Windenergieanlage (100) mit einer Betriebssoftware (36), umfassend folgende Schritte:
- Empfangen (12) einer Benutzeridentifikation (16) mit einer von mehreren Benutzerschnittstellen (14a, 14b),
- Zuweisen (21) der Benutzeridentifikation (16) oder eines Teils der Benutzeridentifikation (16) zu einer Zugriffsgruppe (22a, 22b, 22c), wobei der Zugriffsgruppe (22a, 22b, 22c) ein oder mehrere Berechtigungsgruppen (24) einer Gesamtmenge von Berechtigungsgruppen (24) zugeordnet sind, und wobei jeder Berechtigungsgruppe (24) ein oder mehrere Ausgangswertspeicherstellen (26) und/oder Eingangswertspeicherstellen (28) zugeordnet sind,
- Erlauben eines Zugriffs (38) von der Benutzerschnittstelle (14a, 14b) auf alle Ausgangswertspeicherstellen (26) und/oder Eingangswertspeicherstellen (28), die der zugewiesenen Zugriffsgruppe (22a, 22b, 22c) über die Berechtigungsgruppen (24) zugeordnet sind,
wobei mit der Benutzeridentifikation (16) ein Lokalisierungsidentifikator (18) empfangen wird, wobei der Lokalisierungsidentifikator (18) zumindest anzeigt, ob die Benutzeridentifikation (16) von einer innerhalb der Windenergieanlage (100) liegenden Benutzerschnittstelle (14a, 14b) oder von einer Benutzerschnittstelle (14a, 14b) eines entfernten Rechners über eine Windenergieanlagenschnittstelle empfangen wurde und eine empfangene Benutzeridentifikation (16) in Abhängigkeit von dem damit zusammen empfangenen Lokalisierungsidentifikator (18) einer von mehreren unterschiedlichen Zugriffsgruppen (22a, 22b, 22c) zugeordnet wird und/oder
durch die Betriebssoftware (36) ein Aktivstatus (42) vergebbar ist, wobei der Aktivstatus (42) zu jedem Zeitpunkt nur für eine einzige Benutzerschnittstelle (14a, 14b) von den mehreren Benutzerschnittstellen (14a, 14b) vergebbar ist, und ein Zugriff über eine Benutzerschnittstelle (14a, 14b) auf eine Eingangswertspeicherstelle (28) nur dann erlaubt wird, wenn die Betriebssoftware (36) der Benutzerschnittstelle (14a, 14b) den Aktivstatus (42), insbesondere nach einer vorhergehenden Anforderung des Aktivstatus (42) über die Benutzerschnittstelle (14a, 14b), vergeben hat.

2. Verfahren (10) nach Anspruch 1, wobei im Fall, dass der Lokalisierungsidentifikator (18) anzeigt, dass die Benutzeridentifikation (16) von einer innerhalb der Windenergieanlage (100) liegenden Benutzerschnittstelle (14a, 14b) empfangen wurde, der Lokalisierungsidentifikator (18) auch anzeigt, von welcher von mehreren in der Windenergieanlage (100) liegenden Benutzerschnittstellen (14a, 14b), die Benutzeridentifikation (16) empfangen wurde, wobei vorzugsweise unterschiedliche Lokalisierungsidentifikatoren (18) von einer Benutzerschnittstelle (14a, 14b) in einem Turm (102) der Windenergieanlage (100) und einer Benutzerschnittstelle (14a, 14b) in einer Gondel (104) der Windenergieanlage (100), sowie insbesondere einer Benutzerschnittstelle (14a, 14b) in einer Rotornabe der Windenergieanlage (100), empfangen werden.

3. Verfahren (10) nach Anspruch 1 oder 2, wobei jedem Lokalisierungsidentifikator (18) jeweils eine Priorität (20) zugeordnet ist, und nach dem Empfangen einer Anforderung eines Aktivstatus (42) von einer Benutzerschnittstelle (14a, 14b) für einen neuen Zugriff geprüft wird, ob der Aktivstatus (42) für eine andere Benutzerschnittstelle (14a, 14b) für einen zuvor angeforderten Zugriff vergeben ist, und im Fall, dass der Aktivstatus (42) an die andere Benutzerschnittstelle (14a, 14b) vergeben ist, dieser anderen Benutzerschnittstelle (14a, 14b) der Aktivstatus (42) entzogen wird, wenn der Lokalisierungsidentifikator (18) der Benutzerschnittstelle (14a, 14b) für den neuen Zugriff eine höhere Priorität als der Lokalisierungsidentifikator (18) der anderen Benutzerschnittstelle (14a, 14b) aufweist.

4. Verfahren (10) nach einem der vorhergehenden Ansprüche, wobei jeder Zugriffsgruppe (22a, 22b, 22c) jeweils eine Priorität (20) zugeordnet ist, und nach dem Empfangen einer Anforderung eines Aktivstatus (42) von einer Benutzerschnittstelle (14a, 14b), von der eine Benutzeridentifikation (16) für einen neuen Zugriff empfangen wurde, geprüft wird, ob der Aktivstatus (42) für eine andere Benutzerschnittstelle (14a, 14b) vergeben ist, und im Fall, dass der Aktivstatus (42) vergeben ist, der anderen Benutzerschnittstelle (14a, 14b) der Aktivstatus (42) entzogen wird, wenn die der Benutzeridentifikation (16) zugeordnete Zugriffsgruppe (22a, 22b, 22c) des neuen Zugriffs eine höhere Priorität als die Zugriffsgruppe (22a, 22b, 22c) der empfangenen Benutzeridentifikation (16) von der anderen Benutzerschnittstelle (14a, 14b) aufweist.

5. Verfahren (10) nach einem der vorhergehenden Ansprüche, wobei ein Aktivstatus (42) ab der Vergabe nach Ablauf einer bestimmten Dauer (54) zurückgenommen wird oder durch Freigabe von einer Benutzerschnittstelle (14a, 14b), an die der Aktivstatus (42) vergeben ist, zurückgegeben wird.

6. Verfahren (10) nach einem der vorhergehenden Ansprüche, wobei die Betriebssoftware (36) mehrere Softwaremodule (34) aufweist, wobei mehrere oder alle Kommunikationsausgänge (30) der Softwaremodule (34) jeweils als Ausgangswertspeicherstelle (26) und mehrere oder alle Kommunikationseingänge (32) der Softwaremodule (34) jeweils als Eingangswertspeicherstelle (28) bereitgestellt werden.

7. Verfahren (10) nach einem der vorhergehenden Ansprüche, wobei mit einer Benutzerschnittstelle (14a, 14b) Daten der Ausgangswertspeicherstellen (26), die der zugewiesenen Zugriffsgruppe (22a, 22b, 22c) über die Berechtigungsgruppen (24) zugeordnet sind, dargestellt werden und/oder über die Benutzerschnittstelle (14a, 14b) Daten für die Eingangswertspeicherstellen (28), die der zugewiesenen Zugriffsgruppe (22a, 22b, 22c) über die Berechtigungsgruppen (24) zugeordnet sind, empfangen werden.

8. Verfahren (10) nach einem der vorhergehenden Ansprüche, wobei mehreren unterschiedlichen Benutzergruppen zumindest ein gleicher Satz von Ausgangswertspeicherstellen (26) und/oder Eingangswertspeicherstellen (28) zugeordnet ist.

9. Computerprogrammprodukt, das Instruktionen umfasst, die, wenn sie auf einer Windenergieanlagensteuerung ausgeführt werden, ausgebildet sind, das Verfahren nach einem der Ansprüche 1 bis 8 auszuführen.

10. Windenergieanlagensteuerung, die eingerichtet ist, insbesondere durch ein Computerprogrammprodukt nach Anspruch 9, das Verfahren nach einem der Ansprüche 1 bis 8 auszuführen.

11. Windenergieanlage (100) mit einer Windenergieanlagensteuerung nach Anspruch 10.

12. Windenergieanlage (100) nach Anspruch 11, wobei die Windenergieanlage (100) mindestens eine Benutzerschnittstelle (14a, 14b) in der Windenergieanlage (100) und mindestens eine außerhalb der Windenergieanlage (100) liegende, insbesondere durch einen entfernten Rechner gebildete, Benutzerschnittstelle (14a, 14b) für einen Zugriff auf eine Betriebssoftware (36) der Windenergieanlage (100) umfasst.

## Claims

1. A method (10) for the access management of a wind turbine controller of a wind turbine (100) with an operating software (36), comprising the following steps:
- Receiving (12) a user identification (16) with one of several user interfaces (14a, 14b),
- Assigning (21) the user identification (16) or a portion of the user identification (16) to an access group (22a, 22b, 22c), wherein one or several authorization groups (24) of an overall number of authorization groups (24) is allocated to the access group (22a, 22b, 22c), and wherein one or several output value storage locations (26) and/or input value storage locations (28) are allocated to each authorization group (24),
- Allowing an access (38) from the user interface (14a, 14b) to all output value storage locations (26) and/or input value storage locations (28) that are allocated to the assigned access group (22a, 22b, 22c) via the authorization groups (24),
wherein a localization identifier (18) is received with the user identification (16), wherein the localization identifier (18) indicates at least whether the user identification (16) was received from a user interface (14a, 14b) lying within the wind turbine (100) or from a user interface (14a, 14b) of a remote computer via a wind turbine interface and a received user identification (16) is allocated to one of several different access groups (22a, 22b, 22c) as a function of the localization identifier (18) received along with it and/or
the operating software (36) can assign an active status (42), wherein the active status (42) can only be assigned at any point in time for a single user interface (14a, 14b) of the several user interfaces (14a, 14b), and access via a user interface (14a,1 4b) to an input value storage location (28) is only permitted if the operating software (36) of the user interface (14a, 14b) has assigned the active status (42), in particular after the active status (42) was previously requested via the user interface (14a, 14b).

2. The method (10) according to claim 1, wherein, in a case where the localization identifier (18) indicates that the user identification (16) was received from a user interface (14a, 14b) lying within the wind turbine (100), the localization identifier (18) also indicates from which of several user interfaces (14a, 14b) lying in the wind turbine (100) the user identification (16) was received, wherein different localization identifiers (18) are preferably received from a user interface (14a, 14b) in a tower (102) of the wind turbine (100) and a user interface (14a, 14b) in a nacelle (104) of the wind turbine (100), as well as in particular a user interface (14a, 14b) in a rotor hub of the wind turbine (100).

3. The method (10) according to claims 1 or 2, wherein a respective priority (20) is allocated to each localization identifier (18), and after a request for an active status (42) has been received from a user interface (14a, 14b) for a new access, a check is performed to determine whether the active status (42) was assigned for another user interface (14a, 14b) for a previously requested access, and in a case where the active status (42) was assigned to the other user interface (14a, 14b), the active status (42) is withdrawn from this other user interface (14a, 14b) if the localization identifier (18) of the user interface (14a, 14b) for the new access has a higher priority than the localization identifier (18) of the other user interface (14a, 14b).

4. The method (10) according to one of the preceding claims, wherein a respective priority (20) is allocated to each access group (22a, 22b, 22c), and upon receipt of a request for an active status (42) from a user interface (14a, 14b), from which a user identification (16) for a new access was received, a check is performed to determine whether the active status (42) was assigned for another user interface (14a, 14b), and in a case where the active status (42) was assigned, the active status (42) is withdrawn from the other user interface (14a, 14b) if the access group (22a, 22b, 22c) of the new access allocated to the user identification (16) has a higher priority than the access group (22a, 22b, 22c) of the received user identification (16) from the other user interface (14a, 14b).

5. The method (10) according to one of the preceding claims, wherein an active status (42) is withdrawn after the assignment upon expiration of a specific period (54), or returned through release from a user interface (14a, 14b) to which the active status (42) is assigned.

6. The method (10) according to one of the preceding claims, wherein the operating software (36) has several software modules (34), wherein several or all communications outputs (30) of the software modules (34) are each prepared as an output value storage location (26), and several or all communications inputs (32) of the software modules (34) are each prepared as an input value storage location (28).

7. The method (10) according to one of the preceding claims, wherein a user interface (14a, 14b) is used to display data of the output value storage locations (26) that are allocated to the assigned access group (22a, 22b, 22c) via the authorization groups (24), and/or the user interface (14a, 14b) is used to receive data for the input value storage locations (28) that are allocated to the assigned access group (22a, 22b, 22c) via the authorization groups (24).

8. The method (10) according to one of the preceding claims, wherein at least one identical set of output value storage locations (26) and/or input value storage locations (28) is allocated to several different user groups.

9. A computer program product that comprises instructions which, when performed on a wind turbine controller, are designed to implement the method according to one of claims 1 to 8.

10. A wind turbine controller that is set up to implement the method according to one of claims 1 to 8, in particular via a computer program product according to claim 9.

11. A wind turbine (100) with a wind turbine controller according to claim 10.

12. A wind turbine (100) according to claim 11, wherein the wind turbine (100) comprises at least one user interface (14a, 14b) in the wind turbine (100), and at least one user interface (14a, 14b) lying outside of the wind turbine (100), formed in particular by a remote computer, for access to an operating software (36) of the wind turbine (100).

## Revendications

1. Procédé (10) de gestion d'accès à une commande d'éolienne d'une éolienne (100) avec un logiciel d'exploitation (36), comprenant des étapes suivantes :
- de réception (12) d'une identification d'utilisateur (16) avec une de plusieurs interfaces utilisateur (14a, 14b),
- d'attribution (21) de l'identification d'utilisateur (16) ou d'une partie de l'identification d'utilisateur (16) à un groupe d'accès (22a, 22b, 22c), dans lequel un ou plusieurs groupes d'autorisation (24) d'une quantité totale de groupes d'autorisation (24) sont associés au groupe d'accès (22a, 22b, 22c), et dans lequel un ou plusieurs emplacements de stockage de valeurs de sortie (26) et/ou emplacements de stockage de valeurs d'entrée (28) sont associés à chaque groupe d'autorisation (24),
- d'autorisation d'un accès (38) depuis l'interface utilisateur (14a, 14b) à tous les emplacements de stockage de valeurs de sortie (26) et/ou les emplacements de stockage de valeurs d'entrée (28), qui sont associés au groupe d'accès (22a, 22b, 22c) attribué par l'intermédiaire des groupes d'autorisation (24),
dans lequel un identifiant de localisation (18) est reçu avec l'identification d'utilisateur (16), dans lequel l'identifiant de localisation (18) indique au moins si l'identification d'utilisateur (16) a été reçue par une interface utilisateur (14a, 14b) située à l'intérieur de l'éolienne (100) ou par une interface utilisateur (14a, 14b) d'un ordinateur éloigné par l'intermédiaire d'une interface d'éolienne et une identification d'utilisateur (16) reçue est associée, en fonction de l'identifiant de localisation (18) reçu conjointement avec celle-ci, à un de plusieurs groupes d'accès (22a, 22b, 22c) différents, et/ou
un statut actif (42) peut être attribué par le logiciel d'exploitation (36), dans lequel le statut actif (42) peut être attribué à chaque moment seulement pour une unique interface utilisateur (14a, 14b) par les plusieurs interfaces utilisateur (14a, 14b), et un accès par l'intermédiaire d'une interface utilisateur (14a, 14b) à un emplacement de stockage de valeurs d'entrée (28) n'est alors autorisé que lorsque le logiciel d'exploitation (36) de l'interface utilisateur (14a, 14b) a attribué le statut actif (42), en particulier après une demande antérieure du statut actif (42) par l'intermédiaire de l'interface utilisateur (14a, 14b).

2. Procédé (10) selon la revendication 1, dans lequel, si l'identifiant de localisation (18) indique que l'identification d'utilisateur (16) a été reçue par une interface utilisateur (14a, 14b) située à l'intérieur de l'éolienne (100), l'identifiant de localisation (18) indique également l'interface utilisateur (14a, 14b), des plusieurs interfaces utilisateur situées dans l'éolienne (100), qui a reçu l'identification d'utilisateur (16), dans lequel de préférence différents identifiants de localisation (18) sont reçus par une interface utilisateur (14a, 14b) dans une tour (102) de l'éolienne (100) et par une interface utilisateur (14a, 14b) dans une nacelle (104) de l'éolienne (100) ainsi qu'en particulier par une interface utilisateur (14a, 14b) dans un moyeu de rotor de l'éolienne (100).

3. Procédé (10) selon la revendication 1 ou 2, dans lequel respectivement une priorité (20) est associée à chaque identifiant de localisation (18) et il est vérifié, après la réception d'une demande d'un statut actif (42) par une interface utilisateur (14a, 14b) pour un nouvel accès, si le statut actif (42) est attribué pour une autre interface utilisateur (14a, 14b) pour un accès demandé antérieurement, et si le statut actif (42) est attribué à l'autre interface utilisateur (14a, 14b), le statut actif (42) est retiré de ladite autre interface utilisateur (14a, 14b) lorsque l'identifiant de localisation (18) de l'interface utilisateur (14a, 14b) présente, pour le nouvel accès, une priorité plus élevée que l'identifiant de localisation (18) de l'autre interface utilisateur (14a, 14b).

4. Procédé (10) selon l'une quelconque des revendications précédentes, dans lequel respectivement une priorité (20) est associée à chaque groupe d'accès (22a, 22b, 22c), et il est vérifié, après la réception d'une demande d'un statut actif (42) par une interface utilisateur (14a, 14b), par laquelle une identification d'utilisateur (16) a été reçue pour un nouvel accès, si le statut actif (42) est attribué pour une autre interface utilisateur (14a, 14b), et si le statut actif (42) est attribué, le statut actif (42) est retiré de l'autre interface utilisateur (14a, 14b) lorsque le groupe d'accès (22a, 22b, 22c) associé à l'identification d'utilisateur (16) du nouvel accès présente une priorité plus élevée que le groupe d'accès (22a, 22b, 22c) de l'identification d'utilisateur (16) reçue par l'autre interface utilisateur (14a, 14b).

5. Procédé (10) selon l'une quelconque des revendications précédentes, dans lequel un statut actif (42) est retiré de l'attribution après écoulement d'une certaine période (54) ou est redonné par validation d'une interface utilisateur (14a, 14b) à laquelle le statut actif (42) est attribué.

6. Procédé (10) selon l'une quelconque des revendications précédentes, dans lequel le logiciel d'exploitation (36) présente plusieurs modules de logiciel (34), dans lequel plusieurs ou toutes les sorties de communication (30) des modules de logiciel (34) sont fournies respectivement en tant qu'emplacement de stockage de valeurs de sortie (26) et plusieurs ou toutes les entrées de communication (32) des modules de logiciel (34) sont fournies respectivement en tant qu'emplacement de stockage de valeurs d'entrée (28).

7. Procédé (10) selon l'une quelconque des revendications précédentes, dans lequel des données des emplacements de stockage de valeurs de sortie (26), qui sont associées au groupe d'accès (22a, 22b, 22c) attribué par l'intermédiaire des groupes d'autorisation (24), sont affichées avec une interface utilisateur (14a, 14b), et/ou des données pour les emplacements de stockage de valeurs d'entrée (28), qui sont associées au groupe d'accès (22a, 22b, 22c) attribué par l'intermédiaire des groupes d'autorisation (24), sont reçues par l'intermédiaire de l'interface utilisateur (14a, 14b).

8. Procédé (10) selon l'une quelconque des revendications précédentes, dans lequel au moins un ensemble identique d'emplacements de stockage de valeurs de sortie (26) et/ou d'emplacements de stockage de valeurs d'entrée (28) est associé à plusieurs groupes d'utilisateurs différents.

9. Produit de programme d'ordinateur, qui comprend des instructions, qui, lorsqu'elles sont exécutées sur une commande d'éolienne, sont réalisées pour exécuter le procédé selon l'une quelconque des revendications 1 à 8.

10. Commande d'éolienne qui est mise au point pour exécuter le procédé selon l'une quelconque des revendications 1 à 8 en particulier par un produit de programme d'ordinateur selon la revendication 9.

11. Eolienne (100) avec une commande d'éolienne selon la revendication 10.

12. Eolienne (100) selon la revendication 11, dans laquelle l'éolienne (100) comprend au moins une interface utilisateur (14a, 14b) dans l'éolienne (100) et au moins une interface utilisateur (14a, 14b) située à l'extérieur de l'éolienne (100), formée en particulier par un ordinateur éloigné pour un accès à un logiciel d'exploitation (36) de l'éolienne (100).
